Europäisches Patentamt

European Patent Office

Office européen des brevets

(11) Publication number: **0 313 290 B1**

# EUROPEAN PATENT SPECIFICATION

(45) Date of publication of patent specification :
10.07.91 Bulletin 91/28

(51) Int. Cl.⁵ : **F03G 1/00, G04B 17/30, H02K 7/00**

(21) Application number : 88309714.9

(22) Date of filing : 17.10.88

(54) electro-mechanical actuators.

(30) Priority : 21.10.87 GB 8724658

(43) Date of publication of application :
26.04.89 Bulletin 89/17

(45) Publication of the grant of the patent :
10.07.91 Bulletin 91/28

(84) Designated Contracting States :
AT BE CH DE FR IT LI NL SE

(56) References cited :
FR-A- 1 029 367
GB-A- 2 018 389
GB-A- 2 032 053
PATENT ABSTRACTS OF JAPAN, vol. 9, no.
249 (M-419)[1972], 5th October 1985, page 125
M 419
IDEM
PATENT ABSTRACTS OF JAPAN, vol. 7, no. 13
(E-153)[1158], 19th January 1983, page 23 E
153

(73) Proprietor : SATCHWELL CONTROL SYSTEMS
LIMITED
P.O. Box 57 Farnham Road
Slough Berkshire SL1 4UH (GB)

(72) Inventor : Bzdek, Mieczyslaw
8, Stowe Road
Slough Berkshire SL1 5QF (GB)
Inventor : Wingrove, Donald William
12, Fernhurst Close
Beaconsfield Buckinghamshire HP9 1AN (GB)

(74) Representative : Pope, Michael Bertram
Wingate
Central Patent Department Wembley Office
The General Electric Company, p.l.c. Hirst
Research Centre East Lane
Wembley Middlesex HA9 7PP (GB)

## Description

This invention relates to electro-mechanical actuators.

More particularly the invention relates to electro-mechanical actuators of the kind, hereafter referred to as the kind specified, including an electric drive means arranged to drive an output member of the actuator, and mechanical energy storage means arranged to return the output member to a datum position on failure of the electric supply to the drive means.

A common use of such actuators is for operating valves for controlling the flow of fluid.

Such electro-mechanical actuators frequently employ means for controlling the release of energy by the energy storage means on failure of the supply to the motor. In known actuators such means comprises a hydraulic or friction damping means, but the former exhibits the disadvantage that the seals of hydraulic damping means deteriorate over long periods of use and the friction pads of friction damping means are subject to excessive wear over long periods of use. In this connection it is pointed out that testing of the means whereby the output member is returned to its datum position on failure of the supply is typically carried out at regular intervals e.g. daily.

It is an object of the present invention to provide an electro-mechanical actuator of the kind specified wherein this difficulty is overcome.

According to the present invention an electro-mechanical actuator of the kind specified includes an air brake for controlling the release of energy by the energy storage means.

In a preferred embodiment of the invention said air-brake comprises a member mounted on a shaft arranged to be rotated by the energy storage means when releasing energy so that the member acts on the ambient air to provide a braking action.

The use of air brakes for controlling the release of energy from springs over relatively long periods, i.e. as a governor, is well known in some arts. However, the use of an air brake in an electro-mechanical actuator in accordance with the invention where a large release of energy over a very short period occurs is a novel application of an air brake.

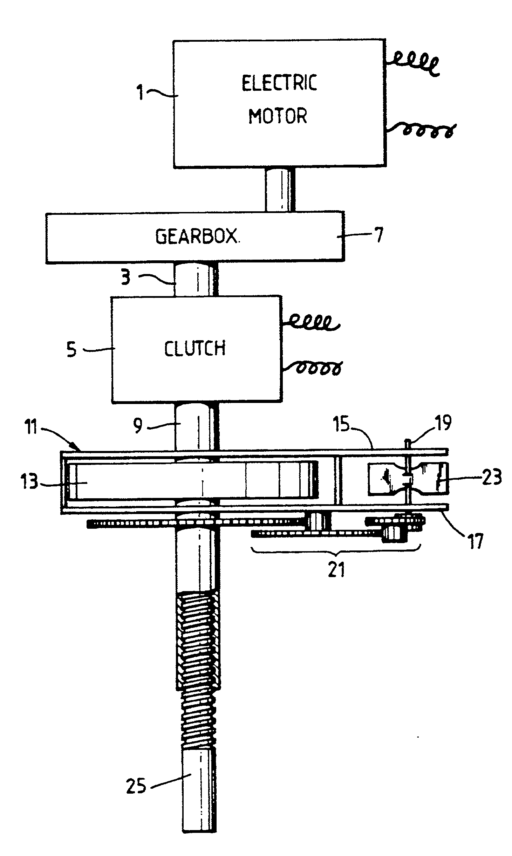

One electro-mechanical actuator in accordance with the invention will now be described, by way of example, with reference to the accompanying drawing which is a schematic diagram of the actuator.

Referring to the drawing, the actuator includes a drive means comprising an electric motor 1 which drives the input shaft 3 of an electromagnetic clutch 5 via a gearbox 7. The output shaft 9 of the clutch passes centrally through a compartment 11 secured to the frame (not shown) of the actuator. The compartment 11 houses a flat wound coil spring 13 i.e. a spring of the clockwork motor type, the spring 13 being attached at its inner end to the shaft 9 and at its outer end to the wall of the compartment 11.

The two main walls 15, 17 of the compartment 11 extend beyond the spring 13 at one side where a spindle 19 is supported between the two walls 15, 17 for axial rotation by the output shaft 9 via a gear train 21 carried on the adjacent wall 17 of the compartment 11. The spindle 19 carries a rectangular planar member 23 positioned centrally on the spindle 19 in the plane of the axis of the spindle 19 so that the member 23 acts as a two-armed paddle as the spindle 19 rotates with arms extending in opposite directions from the spindle 19.

The output shaft 9 is hollow and has an internal thread which engages an external thread on a rod 25 which fits within the shaft 9 and constitutes the output member of the actuator.

In operation, when the electric motor 1 and clutch 5 are energised, the shaft 9 is rotated causing the actuator output member 25 to move axially in one direction or the other.

When the motor 1 drives in one direction the spring 13 is wound up, and the spring 13 unwinds as the motor 1 drives in the other direction. If the electric supply to the drive means, more particularly to the clutch 5, fails, the spring 13, if not at that time already unwound, rapidly assumes its unwound condition, thus causing the shaft 9 to rotate and return the actuator output member 25 to a datum position corresponding to the unwound condition of the spring 13. At the same time, the member 23 is very rapidly rotated, and consequently acts on the ambient air as it rotates to provide a braking action on the spring 13 such as to cause the spring 13 to release its stored energy in a controlled manner. As a result, sudden mechanical shocks to the mechanism, with the possibility of jamming, are avoided, and the actuator output member 25 is returned rapidly and smoothly to the datum position.

It will be appreciated that by arranging for the assembly comprising the spring 13 spring compartment 11, gear train 21, spindle 19 and member 23 to be mountable either way up, on the shaft 9, or for the spring 13 to be mountable either way up in the spring compartment 11, the datum position of the output member 25 of the actuator may be chosen to be at either limit of its axial motion.

It will be understood that a desired braking action may easily be obtained by appropriately choosing the gear ratios in the gear train 21 and/or the area of the member 23. Similarly, a member 23 with arms having a concave shape in the direction of rotation under action of the spring 13 to increase air resistance to rotation may be used. Furthermore, increased braking action may be obtained by using a paddle member 23 with more than two arms and providing more than one paddle member 23 driven from the shaft 9.

It will be further understood that whilst a flat wound coil spring is used in the actuator described by way of example for mechanical energy storage, other forms of spring means and indeed other forms of mechanical energy storage means may be used in other actuators in accordance with the invention. However, storage other than by a spring means is unlikely to be practical for most applications. Furthermore, other drive means, such as a chain or belt drive means, may be used instead of a gear train to drive the air brake from the mechanical energy storage means. Also, the motion of the output member of the actuator is not necessarily linear, and may, for example, be rotary.

## Claims

1. An electro-mechanical actuator comprising : an electric drive means (1, 5, 7) arranged to drive an output member (25) of the actuator ; mechanical energy storage means (13) arranged to return the output member (25) to a datum position on failure of the electric supply to the drive means (1, 5, 7) ; and means (19, 21, 23) for controlling the release of energy by said energy storage means ; characterised in that said means for controlling comprises an airbrake (19, 21, 23).

2. An actuator according to Claim 1 wherein said air-brake (19, 21, 23) comprises a paddle member (23) mounted on a spindle (19) arranged to be rotated by the energy storage means (13) when releasing energy so that said paddle member (23) acts on the ambient air to provide a braking action.

3. An actuator according to Claim 2 wherein said paddle member (23) comprises two arms extending in opposite radial directions from said spindle (19).

4. An actuator according to Claim 2 or Claim 3 wherein said spindle (19) is driven by said energy storage means (13) via a gear train (21).

5. An actuator according to any one of the preceding Claims wherein said energy storage means (13) comprises spring means (13).

6. An actuator according to Claim 5 wherein said spring means (13) comprises a flat wound coil spring (13).

7. An actuator according to Claim 5 or Claim 6 when dependent on Claim 2 wherein said spindle (19) is mounted between opposite walls (15, 17) of a compartment (11) housing said spring means (13).

8. An actuator according to Claim 7 when dependent on Claim 4 wherein said gear train (21) is carried on one (17) of said walls (15, 17).

9. An actuator according to any one of the preceding claims said energy storage means (13) acts on, and said air brake (19, 21, 23) is operated by, a shaft (9) coupled to said drive means (1, 5, 7) for axial rotation thereby.

10. An actuator according to Claim 9 wherein said shaft (9) forms part of the coupling between said drive means (1, 5, 7) and said output member (25).

## Revendications

1. Dispositif électro-mécanique de commande comportant : un ensemble (1, 5, 7) d'entraînement électrique agencé de manière à entraîner l'organe (25) de sortie de ce dispositif de commande, un accumulateur (13) d'énergie mécanique agencé de manière à ramener cet organe (25) de sortie à une position de référence en cas de défaut d'alimentation de cet ensemble (1, 5, 7) d'entraînement et des éléments (19, 21, 23) destinés à régler la délivrance d'énergie par cet accumulateur, dispositif caractérisé en ce que ces éléments de régulation constituent un frein (19, 21, 23) à air.

2. Dispositif de commande selon la revendication 1, dans lequel le frein (19, 21, 23) à air comprend une palette (23) montée sur un pivot (19) agencé de manière à être entraîné en rotation par l'accumulateur (13) d'énergie lorsque celui-ci libère son énergie, de façon que cette palette (23) agisse sur l'air ambiant pour créer une action de freinage.

3. Dispositif de commande selon la revendication 2, dans lequel la palette (23) comporte deux bras, qui partent du pivot (19) radialement et dans des sens opposés.

4. Dispositif de commande selon la revendication 2 ou 3, dans lequel ledit pivot (19) est entraîné par ledit accumulateur (13) d'énergie par l'entremise d'un train (21) d'engrenages.

5. Dispositif de commande selon l'une quelconque des revendications précédentes, dans lequel l'accumulateur (13) d'énergie est ou comprend un moyen (13) de type ressort.

6. Dispositif de commande selon la revendication 5, dans lequel le moyen (13) de type ressort est un ressort (13) spiral plat.

7. Dispositif de commande selon la revendication 5 ou 6 lorsqu'elle(s) dépend(ent) de la revendication 2, dans lequel ledit pivot (19) est monté entre des parois (15, 17) opposées d'une cage (11) qui loge ledit ressort (13).

8. Dispositif de commande selon la revendication 7, lorsqu'elle dépend de la revendication 4, dans lequel le train (21) d'engrenages est monté sur l'une (17) des parois (15, 17).

9. Dispositif de commande selon l'une quelconque des revendications précédentes, dans lequel l'accumulateur (13) d'énergie agit sur un arbre (9), qui est couplé à l'ensemble (1, 5, 7) d'entraînement de manière que celui-ci l'entraîne en rotation et qui fait agir le frein (19, 21, 23) à air.

10. Dispositif de commande selon la revendication 9, dans lequel ledit arbre (9) fait partie de la liaison d'entraînement entre l'ensemble (1, 5, 7) d'entraînement et l'organe (25) de sortie.

**Ansprüche**

1. Elektromechanischer Antrieb, enthaltend : eine elektrische Antriebsvorrichtung (1, 5, 7), die zum Antrieb eines Ausgangsglieds (25) des Antriebs dient ; eine mechanische Energiespeichervorrichtung (13), die beim Ausfall der elektrischen Versorgung für die Antriebsvorrichtung (1, 5, 7) zum Zurückbringen des Ausgangsglieds (25) in eine Bezugsposition dient ; und eine Vorrichtung (19, 21, 23) zum Steuern der Freigabe von Energie durch die Energiespeichervorrichtung ; dadurch gekennzeichnet, daß diese Vorrichtung zum Steuern eine Luftbremse (19, 21, 23) enthält.

2. Antrieb nach Anspruch 1, bei dem die Luftbremse (19, 21, 23) ein Flügelteil (23) enthält, das an einer Achse (19) befestigt ist, die bei der Freigabe von Energie durch die Energiespeichervorrichtung (13) gedreht wird, so daß das Flügelteil (23) auf die Umgebungsluft einwirkt, um eine Bremswirkung vorzusehen.

3. Antrieb nach Anspruch 2, bei dem das Flügelteil (23) zwei Arme aufweist, die sich in zueinander entgegengesetzten Radialrichtungen von der Achse (19) weg erstrecken.

4. Antrieb nach Anspruch 2 oder Anspruch 3, bei dem die Achse (19) über einen Getriebezug (21) von der Energiespeichervorrichtung (13) angetrieben wird.

5. Antrieb nach einem der vorstehenden Ansprüche, bei dem die Energiespeichevorrichtung (13) eine Federvorrichtung (13) enthält.

6. Antrieb nach Anspruch 5, bei dem die Federvorrichtung (13) eine flache gewundene Spiralfeder (13) enthält.

7. Antrieb nach Anspruch 5 oder Anspruch 6, sofern abhängig von Anspruch 2, bei dem die Achse (19) zwischen einander gegenüberliegenden Wänden (15, 17) eines Faches (11) vorgesehen ist, das ein Gehäuse für die Federvorrichtung (13) bildet.

8. Antrieb nach Anspruch 7, sofern abhängig von Anspruch 4, bei dem der Getriebezug (21) von einer (17) der Wände (15, 17) getragen wird.

9. Antrieb nach irgendeinem der vorstehenden Ansprüche, bei dem die Energiespeichervorrichtung (13) auf eine Welle (9) einwirkt und die Luftbremse (19, 21, 23) von dieser Welle (9) betätigt wird, die mit der Antriebsvorrichtung (1, 5, 7) zu ihrem axialen Drehantrieb gekuppelt ist.

10. Antrieb nach Anspruch 9, bei dem die Welle (9) Teil der Kupplung zwischen der Antriebsvorrichtung (1, 5, 7) und dem Ausgangsglied (25) bildet.